# EUROPEAN PATENT APPLICATION

(11) **EP 3 739 703 A1**
(43) Date of publication of application: **18.11.2020**
(21) Application number: 20174544.5
(22) Date of filing: 13.05.2020
(51) Int. Cl.: H02G 3/10, H02G 3/12, H02G 3/14, H02G 3/18

(54) **MODULAR ELECTRIC OR ELECTRONIC DEVICE**

(30) Priority: 14.05.2019 BE 201905318
(71) Applicant: Niko NV, 9100 Sint-Niklaas (BE)
(72) Inventor: D'HONT, Arnaud, 9000 Gent (BE); DE WITTE, Wim, 9100 Sint-Niklaas (BE); THIERENS, Jan, 9100 Sint-Niklaas (BE)
(74) Representative: DenK iP

(57) **Abstract**

The present invention provides a modular electric or electronic device (10). The modular electric or electronic device (10) comprises a wall unit (1) for being fixedly provided in or on a wall or ceiling and being adapted for delivering power to the modular electric or electronic device (10), and a base module (3) comprising a basic functional device. The base module (3) further comprises a first interface (4) for interfacing with and connecting to the wall unit (1). According to the invention, the base module (3) furthermore comprises at least one second interface (5) providing the possibility for interfacing with and connecting to at least one extension module (19) for providing further functionality to the modular electric or electronic device (10).

## Description

### Technical field of the invention

The present invention relates to electric or electronic devices. More particularly, the invention relates to a modular electric or electronic device to which functionality can be added in a simple way by an installer and/or a user.

### Background of the invention

Nowadays people require more and more features to be controlled and integrated in their homes. This results in a lot of control devices such as switches, USB chargers, sensor devices, and the like controlling a lot of devices in the homes. Further, technology is evolving fast and consequently such devices become outdated very fast. Some control devices, such as e.g. sensor devices, may have a limited life span and need to be changed every 3 to 7 years, depending on the type of control device. Also technology changes fast. Therefore, control device manufacturers need to constantly develop new devices to follow these technology changes and users want to be able to incorporate such new control devices into their existing system, not having to replace their system together with the new control devices every 3 to 7 years. Moreover, not all technology is suitable for being placed in a wall for e.g. 20 years, such as e.g. a touchscreen.

Changing or replacing such devices or adding new devices is often difficult for a user and requires the help of an installer or electrician. Therefore, people often wait to change these control devices and are not so happy with the existing electrical installation in their home.

### Summary of the invention

It is an object of embodiments of the present invention to provide a modular electric or electronic device for which it is easy to replace, interchange, and add functionalities.

The above objective is accomplished by a device according to embodiments of the present invention.

The present invention provides a modular electric or electronic device. The modular electric or electronic device comprises a wall unit for being provided in or on a wall or ceiling. The wall unit is fixedly connected to the wall or ceiling. Therefore, according to embodiments of the invention, the wall unit may comprise a frame for fixedly connecting the wall unit to the wall or ceiling. The wall unit is further adapted for delivering power to the modular electric or electronic device, and a base module comprising a basic functional device. The base module comprises a first interface for interfacing with and connecting to the wall unit. According to embodiments of the invention, the base module furthermore comprises at least one second interface providing the possibility for interfacing with and connecting to at least one extension module for providing further functionality to the modular electric or electronic device.

The base module is thus adapted, or comprises a second interface, for receiving an extension module, but this is not necessarily so. The base module is an independent module, which means that it can perfectly function without the presence of an extension module, as long as it is connected to the wall unit.

A modular electric or electronic device according to embodiments of the invention provides an easy way to add, remove and interchange electric or electronic functionality to the basic functionality of the device.

A modular electric or electronic device according to embodiment of the invention can be extended with any suitable type of extension module. Adding, removing and interchanging can be done fast and does not require interference of an installer or professional, but can be done by the user himself.

The first interface or, in other words, the interface between the wall unit and the base module, may be formed by a connector-to-connector connection, e.g. an electrical connector, such as, for example, a pin connector, a spring connector or a USB-C connector, or may be formed by a connector-to-PCB connection, or the like.

The physical connection between the wall unit and the base module may comprise a clicking mechanism. According to embodiments of the invention, the clicking mechanism may be a push and pull mechanism.

According to other embodiments, the wall unit may comprise a frame for fixing the wall unit to a wall or ceiling, and the physical connection between the wall unit and the base module may comprise a sliding mechanism for sliding the base module over the frame of the wall unit. According to embodiments of the invention, the sliding mechanism may be adapted to slide the base module up or down or vice versa for respectively connecting and disconnecting to and from the wall unit or may be adapted to slide right and left or vice versa for respectively connecting and disconnecting the base module to and from the wall unit.

According to still further embodiments of the invention, the physical connection between the wall unit and the base module may comprise a twisting mechanism.

The modular electric or electronic device may further comprise means for compensating for crooked walls to avoid having uneven gaps between the base module and the wall. According to embodiments of the invention, the means for compensating for crooked walls may be a snapper mechanism.

According to embodiments of the invention, the modular electric or electronic device may further comprise a cover plate for covering the base module.

According to some embodiments, the wall unit may comprise a frame for fixing the wall unit to a wall or ceiling, and a ring may be provided in between the frame of the wall unit and the cover plate.

The wall unit may comprise a connection to 230V, a DC-net and/or to a bus system of a home automation system.

According to embodiments of the invention, the modular electric or electronic device may further comprise at least one extension module connected to the base module via the at least one second interface.

The second interface, or in other words the interface between the base module and the at least one extension module, may be formed by a connector-to-connector connection, e.g. an electrical connector, such as, for example, a pin connector, a spring connector or a USB-C connector, or may be formed by a connector-to-PCB connection, or the like.

According to embodiments of the invention, the basic functional device of the base module may comprise a switch base, a USB base, a dimmer, a touch button, an orientation light, a touchscreen, a socket base, a blank cover, a sensor device such as e.g. a PIR device, or the like. The extension module may comprise at least one of a sensor extension module, such as e.g. an IAQ, a radar sensor, a motion sensor, an air quality sensor, a PIR sensor or the like, an USB extension module such as e.g. an USB hub, an USB charger, a powerbank, a wireless charger or the like, a light extension module, such as e.g. a nightlight, an emergency light, an escape path, a projection module or the like, an access control extension module, such as e.g. a camera, RFID, a biometrics module or the like, a smart extension module, such as e.g. auto-adjusting lights, a mute doorbell button, a panic button, an all-off button, or the like, an audio extension module, such as e.g. a babyphone, an intercom, a doorbell, a DAB radio, or the like, an internet extension module, such as e.g. a WiFi repeater, a WiFi access point, a powerline Ethernet port, or the like, and a planning extension module, such as e.g. a medication reminder, a roomplanner or the like.

### Brief description of the drawings

It has to be noted that same reference signs in the different figures refer to same, similar or analogous elements.
Fig. 1 and Fig. 2 schematically illustrate an electric or electronic device according to an embodiment of the invention.
Fig. 3 and Fig. 4 schematically illustrate an electric or electronic device according to another embodiment of the invention.
Fig. 5 and Fig. 6 schematically illustrate an electric or electronic device according to another embodiment of the invention.
Fig. 7 to Fig. 9 schematically illustrate an electric or electronic device according to another embodiment of the invention.
Fig. 10 and Fig. 11 schematically illustrate an electric or electronic device according to another embodiment of the invention.
Fig. 12A, Fig. 12B and Fig. 13 schematically illustrate an electric or electronic device according to another embodiment of the invention.
Fig. 14 and Fig. 15 schematically illustrate an electric or electronic device according to another embodiment of the invention.
Fig. 16 schematically illustrates the principle of a modular electric or electronic device according to embodiments of the invention.
Fig. 17 to Fig. 21 schematically illustrate an electric or electronic device according to further embodiments of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

The present invention provides a modular electric or electronic device. The modular electric or electronic device comprises a wall unit for being provided in or on a wall or ceiling. The wall unit is adapted to be fixedly provided to the wall or ceiling, e.g. by means of a frame or any other suitable fixing means as known by a person skilled in the art, and is adapted for delivering power to the electric or electronic device. The modular electric or electronic device further comprises a base module comprising a basic functional device. Furthermore, the base module comprises a first interface between the wall unit and the base module, and at least one second interface providing the possibility for interfacing with and connecting at least one extension module for providing further functionality to the electric or electronic device.

A modular electric or electronic device according to embodiments of the invention provides an easy way to add, remove and interchange electric or electronic functionality to the basic functionality of the device.

A modular electric or electronic device according to embodiment of the invention can be extended with any suitable type of module. Adding, removing and interchanging can be done fast and does not require interference of an installer or professional, but can be done by the user himself.

The present invention will hereinafter be described by means of different embodiments. It has to be understood that these embodiments are only for the ease of understanding the invention and are not intended to limit the invention in any way.

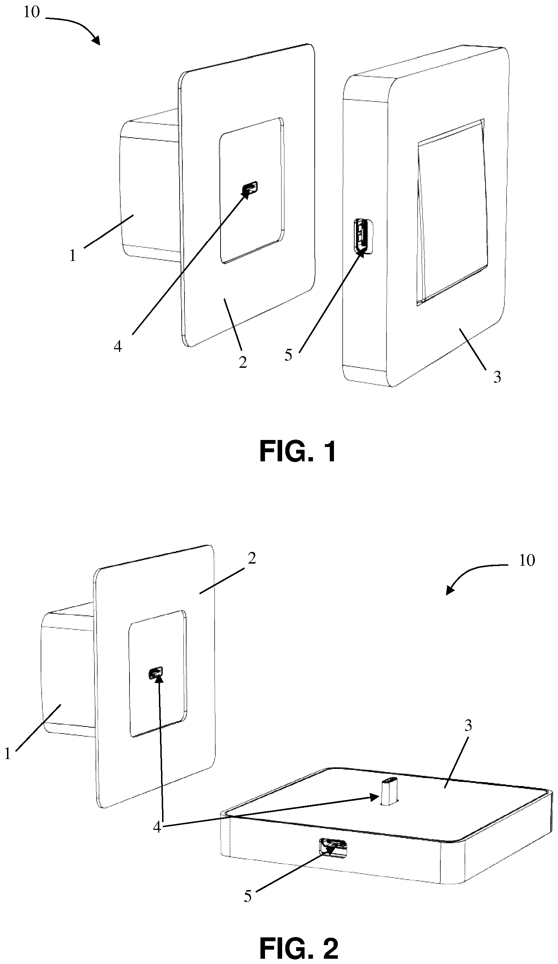

Fig. 1 and Fig. 2 schematically illustrate a modular electric or electronic device 10 according to a first embodiment of the invention. The modular electric or electronic device 10 comprises a wall unit 1, intended for being provided in a wall or ceiling. The wall unit 1 is for fixedly connecting wall unit 1 to the wall or ceiling. According to embodiments of the invention, the wall unit 1 may therefore, for example, comprise a frame 2 for being connected to the wall or ceiling by means of, for example, a snap connection. However, any other suitable fixing means for fixedly connecting the wall unit 1 to the wall or ceiling can also be used. In case a frame 1 is used, when the wall unit 1 is provided in the wall or ceiling, the frame 2 is resting against the wall or ceiling. The wall unit 1 is adapted for delivering power to the electric or electronic device 10, either via 230V or via a DC net. According to further embodiments, and in case of the modular electric or electronic device 10 is part of an automation system, the wall unit 1 may further be adapted to communicate with the automation system via a bus system. According to still further embodiments, the wall unit 1 may be adapted to be provided on a wall instead of in a wall.

The modular electric or electronic device 10 furthermore comprises a base module 3. The base module 3 comprises a basic functional device such as, for example, be a switch base, a dimmer, a touch button, an orientation light, a touchscreen, a socket base, a blank cover, a sensor device such as e.g. a PIR device, or the like.

The base module 3 is an independent module, which means that the base module 3, when connected to the wall unit 1, is a fully fledged device, i.e. it can be used as such. In that way, it can replace existing switch assemblies and is thus very suitable for retrofit applications.

The modular electric or electronic device 10 comprises a first interface between the wall unit 1 and the base module 3. The first interface 4 may be formed by a connector to connector connection such as e.g. an electrical connector such as e.g. a pin connector, a spring connector or a USB-C connector, or may be formed by a connector to PCB connection, or by any other suitable connector as known by a person skilled in the art.

The modular electric or electronic device 10 further comprises at least one second interface 5 providing the possibility for interfacing with and connecting at least one extension module for providing further functionality to the electric or electronic device 10. Hence, the at least one extension module alters the functional behaviour of the base module 3 (see further). However, as already mentioned above, because the base module 3 is an independent module that, when connected to the wall unit 1, can be used as such, an extension module is not necessarily present, but the second interface 5 is provided. This provides to the modular electric or electronic device 10 according to embodiments of the invention the advantage that it can be extended with any suitable extension module at any time when this would be required. For example, a user can perfectly start with providing a modular electric or electronic device 10 according to embodiments of the invention comprising a wall unit 1 and a base module 3. In a later stadium, the user can extend the modular electric or electronic device 10 with at least one extension module as required (see further).

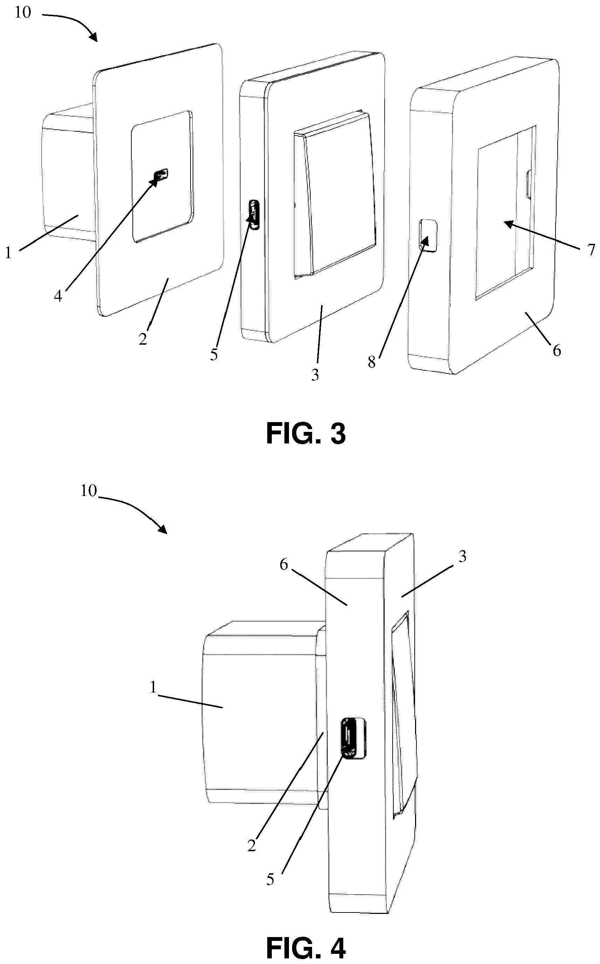

The modular electric or electronic device 10 may furthermore comprise a cover plate 6 for finishing off the device 10. This is illustrated in Fig. 3 (exploded view) and Fig. 4 (assembled view). The cover plate 6 provides a more aesthetic appearance to the modular electric or electronic device 10. Moreover, the cover plate 6 hides any gap that may exist between the wall and the modular electric or electronic device 10 because of an uneven wall. In the example given, the basic functional device is a switch base. The cover plate 6 may in that case be provided with a central hole 7 for receiving the basic functional device, in the example given the switch button of the switch base, of the base module 3. However, this is not necessarily so. Depending on the type of basic functional device, the cover plate 6 may show different properties necessary for covering that type of device.

The cover plate 6 furthermore comprises at least one opening 8 at the location of each of the at least one second interface 5. In the embodiment illustrated in Fig. 3 and Fig. 4, the second interface 5 may be formed by a USB-C connector. This is not intended to limit the invention in any way. The second interface 5 may, in general, be formed by any suitable connector to connector connection such as e.g. an electrical connector such as e.g. a pin connector, a spring connector or a USB-C connector, or may be formed by a connector to PCB connection, or by any other suitable connector as known by a person skilled in the art.

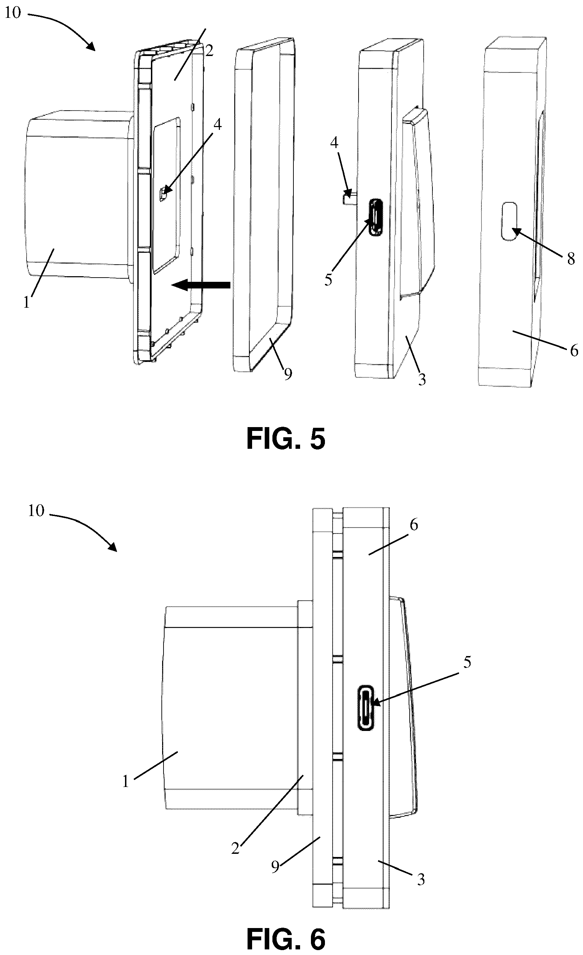

According to embodiments of the invention, and in cases where, as illustrated in the examples, the wall unit comprises a frame 2 for fixedly connecting the wall unit 1 to the wall or ceiling, the modular electric or electronic device 10 may further comprise a ring 9 which is provided onto the frame 2 such that, when the electric or electronic device 10 is mounted, the ring 9 is located in between the frame 2 of the wall unit 1 and the cover plate 6 (see Fig. 5 (exploded view) and Fig. 6 (assembled view). The ring 9 may preferably be made out of a synthetic material. The ring 9 may further hide for gaps which arise when the modular electric or electronic device 10 is mounted on an uneven wall. When the modular electric or electronic device 10 is finished with the cover plate 6, this cover plate 6 hides the ring 9 such that the ring 9 is not or substantially not visible. In the embodiment illustrated in Fig. 5 and Fig. 6, the first interface 4 may be formed by a pin connector. Again, this is not intended to limit the invention in any way. As already mentioned before, the first interface 4 may, according to embodiments of the invention, be formed by a connector to connector connection such as e.g. an electrical connector such as e.g. a pin connector, a spring connector or a USB-C connector, or may be formed by a connector to PCB connection, or by any other suitable connector as known by a person skilled in the art.

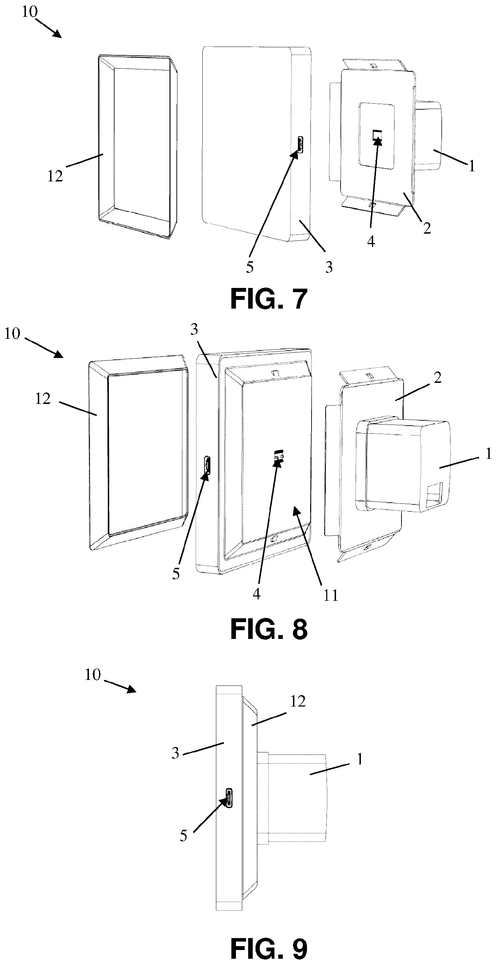

A further embodiment of an electric or electronic device 10 is illustrated in Fig. 7 to Fig. 9. According to this embodiment, a back side 11 of the base module 3 may have a tapered shape. This tapered shape makes it easy to connect the base module 3 to the wall unit 1 and further helps to hide gaps because of installation on uneven walls. A conically shaped ring 12, or in other words a ring with tapered edges, may be provided in between the frame 1 and the cover plate 6 for further hiding the gaps in the uneven wall. In the embodiment illustrated in Fig. 7 to Fig. 9, the first interface 4 may be formed by a spring connector. Such spring connector comprises different contact points which are all individually compressible. In that way, differences in height between the two parts that are connected with such spring connector, in the example given the wall unit 1 and the base module 3, can easily be overcome.

According to the embodiments illustrated in the above described figures, i.e. in Fig. 1 to Fig. 9, the base module 3 may be connected to the wall unit 1 by a simple click or a single snap, in other words the base module 3 may be connected to the wall unit 1 by means of a clicking or snapping mechanism. However, according to further embodiments, also other connection mechanism can be used.

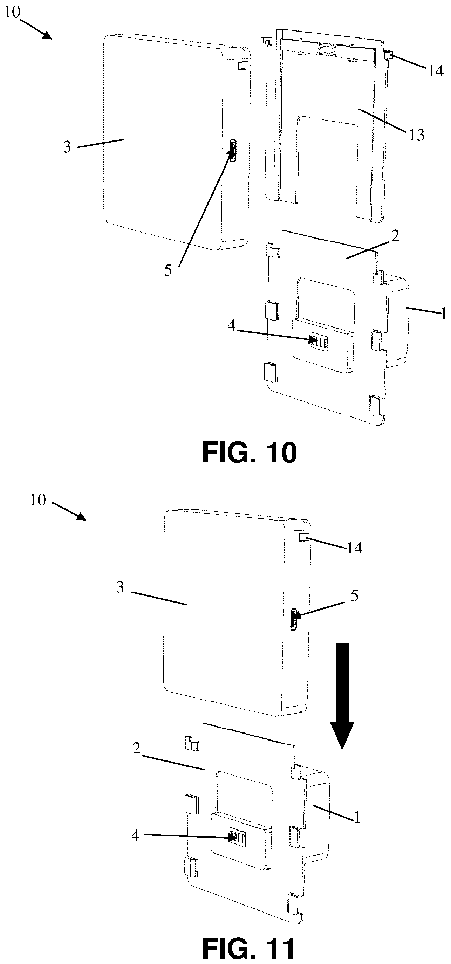

Fig. 10 and Fig. 11 illustrate another embodiment of a modular electric or electronic device 10 according to the invention. The base module 3 may comprise a plate 13 adapted for sliding the base module onto the frame 2. Hence, according to these embodiments, the base module 3 may be provided onto the wall unit 1 by means of a sliding mechanism 13. In other words, in the embodiment illustrated in Fig. 10 and Fig. 11, the first interface 4 may, according to the present embodiment, be formed by a spring connector. However, according to other embodiments of the invention, the first interface 4 may, according to embodiments of the invention, be formed by a connector to connector connection such as e.g. an electrical connector such as e.g. a pin connector, a spring connector or a USB-C connector, or may be formed by a connector to PCB connection, or by any other suitable connector as known by a person skilled in the art.

In the example given in Fig. 10 and Fig. 11, the connection between the base module 3 and the wall unit 1 may be released, or in other words, the base module 3 may be removed from the wall unit 1, by, for example and in the example given, pinching buttons 14 on an upper side of the sliding mechanism 13, allowing the base module 3 to slide up again. It has to be understood that also other ways of removing the base module 3 from the wall unit 1 are comprised within the scope of this invention. In the example, the base module 3 may be connected to and removed from the wall unit 1 by sliding the base module 3 respectively down and up or vice versa. According to other embodiments, however, the base module 3 may also be connected to and removed from the wall unit 1 by respectively sliding the base module 3 right and left or left and right.

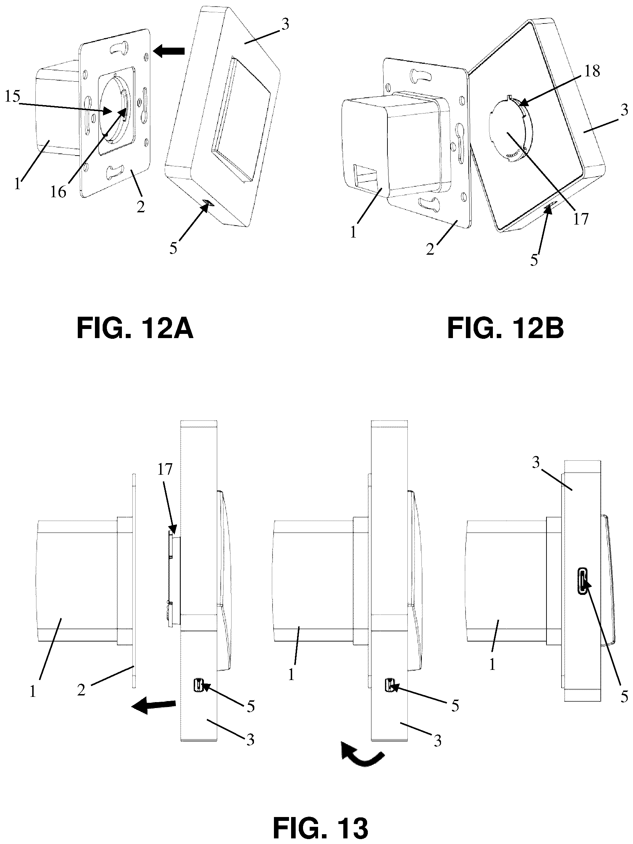

A further embodiment is illustrated in Fig. 12A, Fig. 12B and Fig. 13. According to this embodiment, the base module 3 may be connected to the wall unit 1 by means of a twisting mechanism For this purpose, the wall unit 1 may comprise a circular recess 15, the sides of which comprise at least one groove 16. A back side 11 of the base module 3 may comprise a circular protrusion 17, fitting into the circular recess 15 in the wall unit 1. The circular protrusion 17 comprises at least one rib 18 which, when the base unit 3 is turned clockwise, locks into the at least one groove 16 in the recess 15 in the wall unit 1. The steps are illustrated in Fig. 13. Connecting the base module 3 to the wall unit 1 may, according to this embodiment, comprise inserting the circular protrusion 17 on the base module 3 into the circular recess 15 in the wall unit 1 and then turning the base unit 3 clockwise until it locks into place by locking the at least one rib 18 of the circular protrusion 17 into the groove 16 in the circular recess 15. According to embodiments of the invention, the modular electric or electronic device 10 may furthermore comprise means for compensating for crooked walls, e.g. a snapper system, to avoid uneven gaps between the device 10 and the wall.

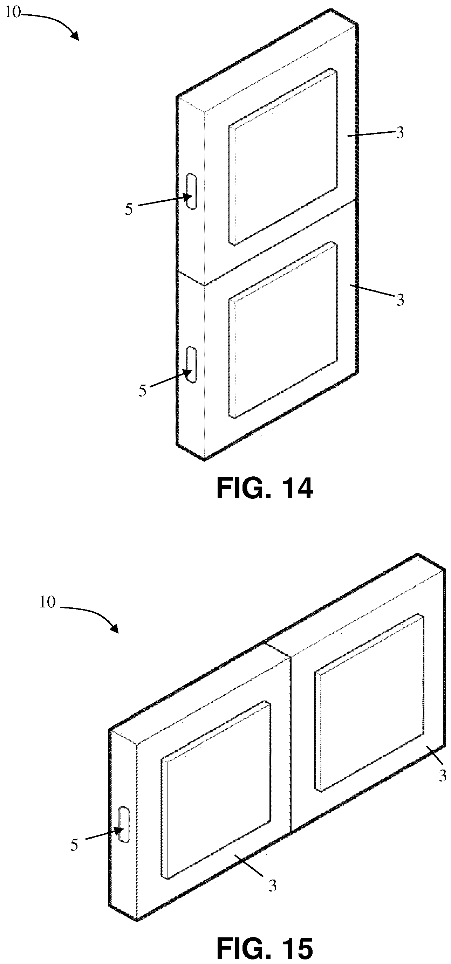

In the above embodiments, the modular electric or electronic device 10 is a single device. An advantage hereof is that there are no limits for extension in any direction. However, according to embodiments of the invention, the modular electric or electronic device 10 may also be double modular electric or electronic device 10, having two wall units 1 and two base modules 3. The double modular electric or electronic device 10 may be directed in a vertical direction (see Fig. 14), i.e. the two devices 10 are oriented one above the other, or in a horizontal direction (see Fig. 15), i.e. the two devices 10 are oriented next to each other. According to embodiments of the invention, the modular electric or electronic device 10 may be finished with a double cover plate 6, i.e. one cover plate 6 covering both devices 10, or with two single, neighbouring cover plates, each covering one of the devices 10.

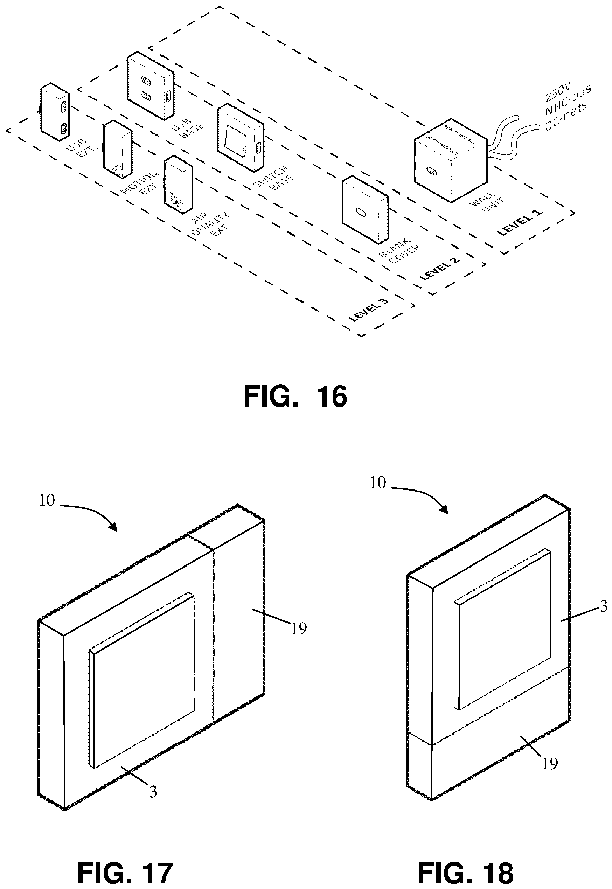

As already described above, the functional behaviour of the base module 3, or in general of the modular electric or electronic device 10 comprising a wall unit 1 and a base unit 3, can be altered by adding at least one extension module 19. The principle is schematically illustrated in Fig. 16. In this figure, it is shown that the modular electric or electronic device 10 according to embodiments of the invention can have at least two levels, level 1 being the wall unit 1 and level 2 being the base module 3. As already described above, the wall unit 1 is adapted for delivering power to the electric or electronic device 10, either via 230V or via a DC net, and may optionally be further adapted to communicate with an automation system via e.g. a bus system, and the base module 3 comprises a basic functional device such as, for example, be a switch base, a dimmer, a touch button, an orientation light, a touchscreen, a socket base, a blank cover, a sensor device such as e.g. a PIR device, or the like. The modular electric or electronic device 10 can then optionally be extended by a level 3, which is at least one extension module 19.

The at least one extension module 19 can be any suitable module known by a person skilled in the art. For example, the at least one extension 19 may be a sensor extension module, such as e.g. IAQ, a radar sensor module, a PIR sensor module or the like. Another example of extension modules may, for example, be an USB extension module (e.g. an USB hub, an USB charger, a powerbank, a wireless charger or the like), a light extension module (e.g. a night light, kid-out-of-bed light, an emergency light, escape path or the like), an access control extension module (e.g. a camera, RFID, biometrics or the like), a smart extension module (e.g. auto-adjusting lights, mute doorbell button, a panic button, an all-off button or the like), an audio extension module (e.g. a babyphone, an intercom, a doorbell, a DAB radio or the like), an internet extension module (e.g. a WiFi repeater, a WiFi access point, a powerline Ethernet port or the like) or a planning extension module (e.g. a medication reminder, a roomplanner or the like). Any combination of any type of extension module 19 with any type of base module 3 may be possible and suitable, depending on the needs or requirements of a user.

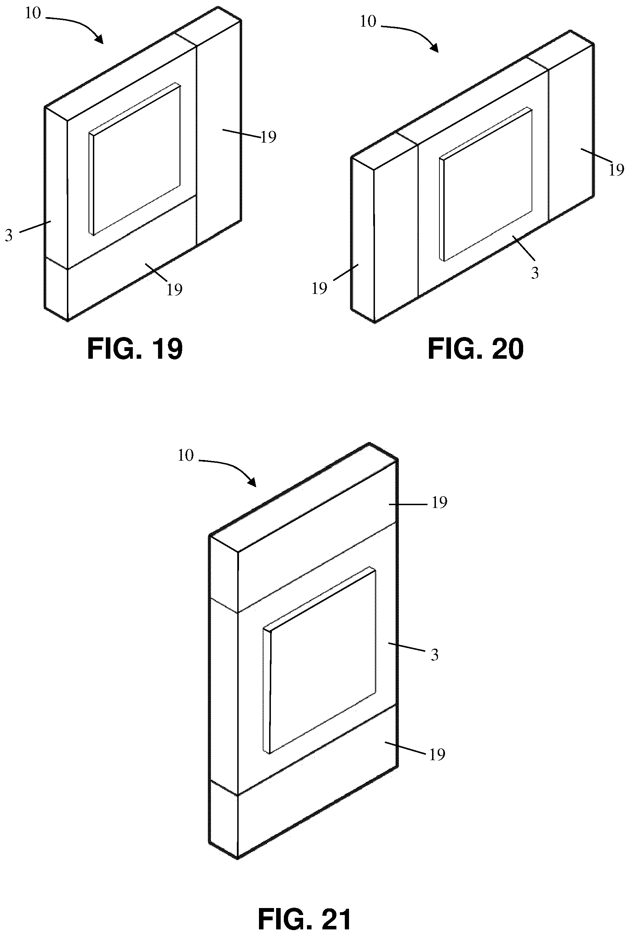

Fig. 17 to Fig. 21 illustrate possible ways for extending a single modular electric or electronic device 10 with at least one extension module 19. Extension with a single extension module 19 is illustrated in Fig. 17 (horizontal) and Fig. 18 (vertical). Extension with two extension modules 19 is illustrated in Figs. 19 to 21. Fig.19 illustrates kind of a mosaic way of extending the base module 3. And Fig. 20 (horizontal) and Fig. 21 (horizontal) illustrate extension with two extension modules. A person skilled in the art will understand that it may also be possible to extend the single modular electric or electronic device 10 with three or four extension modules 19, one at each free side of the base module 3.

It has to be understood that, although not illustrated in the drawings, double modular electric or electronic devices 10 as illustrated in Figs. 14 and 15 can be extended with at least one extension module 19 in a similar way as illustrated in Figs. 17 to 21 for a single modular electric or electronic device 10. It has to be mentioned that in case of a double modular electric or electronic device 10, extension with one, two or three extension modules 19 is possible, one at each free side of the base module 3. As for a double modular electric or electronic device 10, one side of each of the base modules is "occupied" by a side of the other base module, there may be one extension possibility less than for a single modular electric or electronic device 10.

## Claims

1. A modular electric or electronic device (10) comprising:
- a wall unit (1) for being fixedly provided in or on a wall or ceiling, the wall unit (1) being adapted for delivering power to the modular electric or electronic device (10), and
- a base module (3) comprising a basic functional device,
wherein the base module (3) further comprises a first interface (4) for interfacing with and connecting to the wall unit (1),
**characterized in that** the base module (3) furthermore comprises at least one second interface (5) for interfacing with and connecting to at least one extension module for providing further functionality to the modular electric or electronic device (10).

2. A modular electric or electronic device (10) according to claim 1, wherein the first interface (4) is formed by a connector-to-connector connection or by a connector-to-PCB connection, or the like.

3. A modular electric or electronic device (10) according to claim 1 or 2, further comprising at least one extension module (19) connected to the base module (3) via the at least one second interface (5).

4. A modular electric or electronic device (10) according to any of the previous claims, wherein the second interface (5) is formed by a connector-to-connector connection or by a connector-to-PCB connection, or the like.

5. A modular electric or electronic device (10) according to any of claims 1 to 4, wherein the physical connection between the wall unit (1) and the base module (3) comprises a clicking mechanism.

6. A modular electric or electronic device (10) according to any of claims 1 to 4, the wall unit (1) further comprising a frame (2) for fixedly connecting the wall unit (1) to the wall or ceiling, wherein the physical connection between the wall unit (1) and the base module (3) comprises a sliding mechanism for sliding the base module (3) over the frame (2) of the wall unit (1).

7. A modular electric or electronic device (10) according to any of claims 1 to 4, wherein the physical connection between the wall unit (1) and the base module (3) comprises a twisting mechanism.

8. A modular electric or electronic device (10) according to any of the previous claims, further comprising means for compensating for crooked walls.

9. A modular electric or electronic device (10) according to any of the previous claims, further comprising at least one cover plate (6) for covering the base module (3).

10. A modular electric or electronic device (10) according to claim 7, the wall unit (1) further comprising a frame (2) for fixedly connecting the wall unit (1) to the wall or ceiling, wherein the modular electric or electronic device (10) further comprises a ring (9) in between the frame (2) of the wall unit (1) and the cover plate (6).

11. A modular electric or electronic device (10) according to any of the previous claims, wherein the wall unit (1) comprises a connection to 230V, a DC-net and/or to a bus system of a home automation system.

12. A modular electric or electronic device (10) according to any of the previous claims, wherein the basic functional device of the base module (3) comprises a switch base, a USB base, a dimmer, a touch button, an orientation light, a touchscreen, a socket base, a blank cover, a sensor device, or the like.

13. A modular electric or electronic device (10) according to any of claims 3 to 12, wherein the extension module (19) comprises at least one of a sensor extension module, an USB extension module, a light extension module, an access control extension module, a smart extension module, an audio extension module, an internet extension module, and a planning extension module.
